# EUROPEAN PATENT SPECIFICATION

(11) **EP 1 370 850 B1**
(45) Date of publication and mention of the grant of the patent: **24.07.2013**
(21) Application number: 02708869.9
(22) Date of filing: 14.03.2002
(51) Int. Cl.: G01N 21/55, G01N 21/64

(54) **APPARATUS AND METHOD FOR TOTAL INTERNAL REFLECTION SPECTROSCOPY**
VORRICHTUNG UND VERFAHREN FÜR DIE AUF INNERER TOTALREFLEXION BERUHENDE SPEKTROSKOPIE
APPAREIL ET PROCEDE POUR SPECTROSCOPIE A REFLEXION INTERNE TOTALE

(30) Priority: 14.03.2001 SE 0100889; 16.03.2001 US 276637 P
(43) Date of publication of application: 17.12.2003
(73) Proprietor: GE Healthcare Bio-Sciences AB, 751 84 Uppsala (SE)
(72) Inventor: IVARSSON, Bengt, S-740 22 Bälinge (SE)
(74) Representative: Sörby, Lennart
(86) International application number: PCT/SE2002/000482
(87) International publication number: WO 2002/073171

(56) References cited:
- WO-A1-92/05426
- WO-A1-94/25850
- WO-A1-98/22808
- WO-A1-98/34098
- JP-A- 4 015 976
- JP-A- 2001 188 023

## Description

### Technical field of the invention

The present invention relates to improvements in total internal reflection (TIR) spectroscopy, and more particularly to an apparatus and method for TIR-based spectroscopic imaging with improved angular scanning, particularly attenuated total reflection (ATR) imaging spectroscopy and microscopy.

### Background of the invention

Attenuated total reflection (ATR) spectroscopy, also known as internal reflection spectroscopy (IRS), originates in the observation by Newton almost two centuries ago that a propagating wave of radiation which undergoes total internal reflection (TIR) in a higher index of refraction medium in contact with a lower index of refraction medium gives rise to an evanescent field in the lower refractive index medium. It was, however, not until 1960 that this phenomenon was exploited for producing absorption spectra. Since then, numerous ATR-based applications have been developed, many of them in the biosensor field. In biosensors based on ATR, the evanescent field probes a thin layer (penetration depth about one wavelength) of sample-containing material at a solid/liquid interface, resulting in a measurable attenuation of the reflected radiation in proportion to the imaginary part of the refractive index of the thin layer, i.e. absorption spectroscopy.

As is well-known, the spectrum in ATR-spectroscopy consists of a reflectance vs. wavelength curve or spectrum, where the angle of incidence may be scanned in order to vary evanescent wave penetration depth (see e.g. Harrick, N. J., Internal Reflection Spectroscopy, Harrick Scientific Corp., New York, 1967; and Mirabella, F. M. Jr., Internal Reflection Spectroscopy: Review and Supplement, Harrick Scientific Corp., New York, 1985). Photon absorbance at the ATR-sensor surface, with or without evanescent electrical field strength enhancing metal film or particles, is detected as a more or less sharp and deep minimum, or dip, in the internal reflectance (TIR) curve, and the depth (absorbance peak) is a measure of the amount of detected sample, and the wavelength is used to identify the kind of molecule.

A variant of ATR-spectroscopy, hereinafter referred to as SPR-spectroscopy, is based on surface plasmon resonance (SPR) in an electrical field strengthening layer of metal film or metal islands or particles applied on the solid medium at the solid/liquid interface. The angle (or wavelength) corresponding to the minimum or centroid of the photon absorbance peak, or reflectance dip, and/or the change in angle, is a measure of the amount of detected sample. More particularly, the change in SPR-angle and/or SPR-wavelength is a measure of the change in the real part of the refractive index (n) and/or the change in the thickness (d) of the sample interaction layer or layers at the solid/liquid interface. If the sample also allows photon absorbance, this can be measured via changes in the shape (reflectance minimum and dip width) of the SPR-ATR-curve.

The surface concentration of the sample can be calculated from the shift in SPR-angle and/or SPR-wavelength by use of well-known relations between surface concentration and layer structural parameters n, d, and empirical or calculated refractive index increment of the sample solute (De Feijter, J.A., et al., Biopolymers 17 (1978), 1759; and Salaman, Z., et al., Biochemistry 33 (1994), 13706).

In some SPR-spectroscopic optic configurations, e.g. using both p- and s-polarised light, the photon absorbance is converted into a peak rather than a dip in the reflectance curve, and the angle (or wavelength) position, or shift in position, for this peak is used as a quantitative measure of the amount, or change in amount, of detected sample.

SPR-based sensors are commercially available for use in research and development, for example the BIACORE^{®} instrument line from Biacore AB, Uppsala, Sweden. These instruments use a sensor glass chip covered with a thin gold film and an integrated fluid cartridge for passing sample fluid and other fluids over the sensor chip. A fan shaped beam of light is coupled to the sensor chip via a prism such that an angular range of incident light is reflected internally along a line at the glass/gold film interface creating a plasmon evanescent field at the gold film/fluid interface, and the reflected light intensity distribution versus angle of incidence for a row of sensor spots along the illuminated line, is detected by a photodetector array.

The sensitivity in the detectable change of the angle (or wavelength) at the dip or peak (or in some cases, dips or peaks) of the SPR spectrum is mainly limited by the degree of constancy, drift and noise of the background light intensity of the TIR-curve. Ideally, the TIR-curve is constant versus angle. In practice, however, due to variation of reflectance with the angle of incidence, and the radiation distribution from the light source, the TIR-curve will generally be a gaussian type curving line with at least one maximum and which at its low and high angle ends, respectively, is more or less sloping. The sensitivity of SPR-spectroscopy is, of course, particularly in the case of kinetic studies (measurement of the time dependence of the reflectance curve, shape and/or position), higher the more stable the light intensity at total internal reflection is over the angular or wavelength range of interest, i.e. the less dependent the "background" TIR-curve is on the angle (or wavelength).

The sensitivity of SPR-spectroscopy can thus be further increased if the TIR-curve is normalized, such as by a computer software algorithm. This usually requires highly stable TIR-curve data, i.e. low temporal noise and drift, and that the TIR-curve has as little curvature and sloping as possible and is as smooth as possible. Such computerized normalisation of the TIR-curve is, for example, done in the BIACORE^{®} instruments mentioned above, where the normalisation procedure is performed on the TIR-spectrum with a sample of refractive index high enough to give TIR for the angle range used. Due to the use of a focused light beam (spot or line) and a static optical system in the present BIACORE^{®} instruments, the illuminated sensor surface for TIR is fixed (stationary). The stability of the provided irradiance is therefore only limited by noise and drift in the light source.

Whereas conventional ATR-spectroscopy measures the surface characteristics of a sample at a fixed small spot or a thin line, spatial scanning of the incident light beam across a surface area may produce an image of the spectral property distribution over the scanned area. This technique is usually referred to as ATR-microscopy. Thus, for instance, various arrangements for surface plasmon microscopy (SPM) have been proposed for detection of the spatial distribution of the refractive index. Rather than spatially scanning a focused line or light beam across the sensor surface area with time, it has also been described to momentarily illuminate and image the whole surface area in question and scan the incident light angle or wavelength with time. A biosensor based on ATR-microscopy may, for example, be used for analyzing a large number, or an array, of sample spots simultaneously.

An example of an ATR-sensor apparatus of the last-mentioned type based on scanning the angle of incidence of a probing collimated (parallel) beam which illuminates the whole surface area is disclosed in WO 98/34098. A representative illustration of this system is given in Fig. 1 herein, where a light source, LS, illuminates a collimator optics, CO, to produce a parallel light beam. The beam passes an interference filter, I, as a monochromatic beam and impinges on a first flat scanner mirror, SM1, to be deflected onto a second scanning mirror, SM2. The latter deflects the beam into a prism Pr for coupling the light into a sensor surface, SS, the beam being totally internally reflected at the sensor interface side of the coupling prism. The p-polarized component of the beam then passes a polarizer, P, whereupon the beam is directed into a spherical objective, SO, to produce a real image on a photo detector array or matrix, D, of the sensor surface area from its reflected light intensity pattern.

The detector array D is arranged such that the real image of the sensor area is produced on a rectangular part, D, of the array, the objective SO having its real image plane positioned at the plane of the photodetector array. Numerals 1, 2 and 3 at the detector array D denote the respective images of the corresponding subzones on the sensor surface SS, indicated at 1', 2' and 3', respectively.

The two scanning mirrors SM1 and SM2 have a related rotational or oscillating movement to produce an angularly scanned collimated beam incident within a range of angles of incidence on the sensor surface side of the prism Pr. "Beam walking" of the illuminated area, which is caused by refraction of the collimated light at the entrance of the prism Pr during the scan of the angle of entrance and would give an irregular irradiance (radiant power per unit area) at the sensor surface, is avoided by synchronizing the movements of the scanning mirrors SM1 and SM2 (as well as adapting the distances and angles between mirrors and prism, and scanned angular range of the mirrors) to provide a fixed centre for the intersection of the incident collimated light beam with the sensor surface SS.

In the general type of ATR-microscope described above, the momentary incident angle of the collimated light beam irradiating the sensor surface during the angle scan may de determined by various means. WO 98/34098 proposes to determine the momentary incident angle by detecting a part of the light beam reflected at the sensor surface on a second detector. More particularly, the objective SO comprises an additional part having its back focal plane positioned at the plane of the photodetector array to permit a minor part of the reflected collimated beam to be focused onto a minor, linear part of the detector area so that each angle of reflection corresponds to a specific linear detector position within the detector area.

While in the ATR-microscope described in WO 98/34098 the fixed centre of the illuminated area thus gives a more stable irradiance, or optical power distribution across the cross-section of the beam at the sensor surface than in the case of beam walking, this ATR-microscope has another shortcoming.

Thus, in WO 98/34098, as in conventional ATR-spectroscopy, the centre angle of the collimated beam is orthogonally incident onto the entrance surface of the ATR-prism. During the angle scan of this collimated beam, however, the angle of incidence at the entrance surface of the prism will be oblique, a typical angle range being, say, 15°. Therefore, even for an illuminated ATR-sensor area with eliminated beam walking, i.e. a fixed centre during angle scan, there will be a variation in the light intensity, or irradiance, with the angle of incidence since the intersection area of the incident collimated beam (of mainly constant beam cross-section area) with the ATR-surface will vary in accordance to Lambert's Cosine Law. The length of the intersection area thus has a fixed centre but the length may be said to "oscillate" around its centre.

For example, if the length of the intersection area is denoted L, the length L = (beam diameter) / cosine(angle of incidence), or, in case of a rectangular beam cross section, L = (beam cross-section length) / cosine(angle of incidence). This causes, even if the beam walking has been eliminated, L (and the illuminated area) to increase, and the irradiance to decrease, the larger the angle of incidence at the sensor area. The irradiance is proportional to cosine(angle of incidence), during the angle scan by the following exemplary factors: for angle of incidence scan 63° to 77°: 2.0x; for angle of incidence scan 62° to 82°: 3.37x; and for angle of incidence scan 64° to 84°: 4.19x.

This monotone continuously decreasing light intensity with cosine(angle of incidence) creates a correspondingly sloping TIR-data vs. angle curve. As is readily seen, the reflectance at 77° will be about 50 % of that at 63°, and at 84° only about 25 % of that at 63°.

Such a substantial decrease in light intensity with increased angle of incidence can not readily be compensated for by computerized data processing like the above-mentioned normalisation of the TIR-curve, or at least not without a complex normalization method and software. There is therefore a need for means which overcome the problem of varying light intensity during angular scan in ATR-based microscopy.

Related to ATR-microscopy are other microscopic techniques also based on the evanescent wave phenomenon at total internal reflection without or with evanescent field enhancing metal films or textures, such as, for example, total internal reflection fluorescence (TIRF), total internal reflection phosphorescence, and scattered total internal reflectance (STIR). To overcome the above-mentioned problem of varying light intensity during angular scan would therefore be valuable also in those as well as in other related TIR-techniques.

### Summary of the invention

The present invention overcomes the disadvantages of the prior art TIR-based microscopes, such as the ATR-microscope, and offers additional advantages. In brief, the present invention is based on the concept of varying the intensity of the collimated beam incident on a TIR-sensor surface of fixed centre position (i.e. eliminated beam walking) with the angle of incidence, such that lengthwise extension of the illuminated sensor surface area as the angle of incidence is increased, or the effect of such length extension, is counteracted. In this way, the variation of the radiation intensity at the TIR-sensor surface of fixed centre position during angular scan may thus be eliminated or at least considerably reduced.

In one aspect, the present invention therefore provides an optical apparatus for total internal reflection (TIR) spectroscop, as defined in appended claim 1.

In one embodiment of the above-mentioned aspect of the present invention, the apparatus is to be used for attenuated total reflection (ATR) spectroscopy and the detector or detectors are arranged to detect electromagnetic radiation totally internally reflected at the second surface and exiting from the third surface of the transparent body.

In another embodiment, the detector or detectors are arranged to detect electromagnetic radiation originating from evanescent wave stimulated fluorescence or phosphorescence of a substance(s) in contact with the second reflective surface of the transparent body.

In still another embodiment, the detector or detectors are arranged to detect electromagnetic radiation originating from scattering of a substance(s) at the second surface of the transparent body.

In yet another embodiment, the detector or detectors are arranged to detect at least two of electromagnetic radiation totally internally reflected at the second surface, electromagnetic radiation originating from evanescent wave stimulated fluorescence or phosphorescence, and electromagnetic radiation originating from scattering at the second surface of the transparent body.

The above mentioned entrance and exit surfaces of the transparent body may optionally be one and the same surface.

The apparatus is characterized in that it comprises means for varying the cross-sectional intensity of the at least one beam of collimated electromagnetic radiation incident on the at least one sensing surface area of the sensor unit, in dependence of the incident angle at the sensing surface or surfaces during the angular scan, so that the variation of the irradiance in the illuminated area or areas of fixed center position of the sensing surface or surfaces due to varying length extension in the plane of incidence of the illuminated area or areas during the angular scan, or the effect of such variation on the reflected beam or beams, is counteracted.

In still another aspect, the present invention provides a method of performing total internal reflection based spectroscopy, as defined in appended claim 23.

In one embodiment, the method is used for kinetic studies of binding events at a the method sensor surface.

In a particular embodiment of the above method aspect of the invention, ATR-spectroscopy is performed, i.e. the radiation internally reflected from the illuminated area or areas is imaged onto the detector array.

In preferred embodiments of the above apparatus and method aspects of the invention, variations of the intensity of radiation in the illuminated area(s) of the surface of the transparent body caused by varying length extension of the illuminated area(s) during the angular scan are counteracted by varying the length extension in the plane of incidence of the incident beam (or beams) of collimated electromagnetic radiation in dependence of the incident angle during the angular scan, and more particularly such that the beam cross sectional area is decreased as the angle of incidence at the surface is increased.

Optionally, the apparatuses and method, respectively, of the present invention are arranged to permit use of at least two different wavelengths.

The above and other aspects of the invention will be evident upon reference to the attached drawings and the following detailed description.

### Brief description of the drawings

Fig. 1 is a schematic sectional view of a prior art ATR-microscopy system.
Fig. 2 is a schematic sectional view of an embodiment of apparatus according to the present invention.
Fig. 3 is a diagram showing total internal reflectance (TIR) versus incident angle for (A) the apparatus of Fig. 2, and (B) a prior art ATR-sensor with fixed centre during angle scan.
Fig. 4 is a schematic sectional view of another embodiment of apparatus according to the present invention.
Fig. 5 is a diagram showing total internal reflectance (TIR) versus incident angle during angle scan for the apparatus of Fig. 4.

### Detailed description of the invention

As mentioned above, the present invention is directed to overcoming in TIR-based microscopy, such as ATR-microscopy, the problem of varying irradiance at an internally reflective surface, such as that of an ATR-prism, when irradiating the surface with collimated electromagnetic radiation (with or without beam-walking) and scanning the angle of incidence over an angular range. As already set out, the variation in irradiance is due to the beam intersection increasing as the angle of incidence increases at the beam-intersected internally reflective surface.

According to the invention, this problem is solved by providing means for counteracting the undesired variation in radiation intensity at the internally reflective surface with the angle of incidence to provide for a substantially constant radiation intensity of the incident collimated beam in the plane of the internally reflective surface during the angle scan, or, alternatively, counteracting the effect of such variation on the reflected beam. This may be achieved by either (i) for a beam of constant optical power, continually decreasing the cross-section dimension of the beam (or beam diameter for a circular beam) incident at the internally reflective surface as the angle of incidence at the reflective surface is increased; (ii) for a beam of variable optical power, continually increasing the intensity of the (incident or reflected) beam of electromagnetic radiation as the angle of incidence at the reflective surface is increased; or (iii) using a combination of variants (i) and (ii).

It is also within the scope of the present invention to reduce the effect of such undesired variation of the irradiance at the reflective surface by affecting or modifying the detector response, such as, e.g., modifying the response signal from the detector, optionally in combination with one or more of the approaches (i) and (ii) above.

Some of the technical terms and expressions used in this specification and the appended claims will be defined below or are as defined in the above-mentioned WO 98/34098 (the disclosure of which is incorporated herein by reference in its entirety). Otherwise, the technical terms and expressions have the same meaning as commonly understood to one of ordinary skill in the art to which this invention belongs.

The term "electromagnetic radiation" as used herein means radiation in the visible region (from about 400 to about 750 nm) and in the infrared region (from about 750 nm to about 20 µm), i.e. in the wavelength range from about 0.4 µm to about 20 µm. For simplicity, it will in the following description be referred to as "light".

The "source of electromagnetic radiation" may, for example, be a light emitting diode (LED), laser diode, or an array or bar of LED's or laser diodes. For simplicity, it will hereinafter be referred to as "light source".

The "transparent body" may be an integral element or consist of two (or optionally more) separate elements in optical light-coupling contact with each other. The transparent body containing the internally reflective surface will below often be referred to as transparent ATR-body, or simply ATR-body or ATR-prism, and for simplicity also in total internal reflection contexts not restricted to ATR.

The term "optical thickness" as used herein defines a composite optical property of a material which is a function of both its physical thickness and its refractive index (the complex index of refraction (ñ) consists of a real part (n) responsible for beam refraction, and an imaginary part (k) responsible for the absorption, or beam attenuation, in the medium, i.e. ñ = n - ik).

Morphometric images of the optical thickness, as obtainable by the present invention, may reflect a change in refractive index and/or physical thickness.

The internally reflective surface supports the thin layer of matter to be probed by the evanescent wave elicited by total internal reflection (such as in ATR) and will below often be referred to as a sensor surface.

As is well known, there are two common ways of coupling the light to the sensor surface for creation of an evanescent wave, either by a prism or by a grating. As is also well known, in the prism-coupling case, the sensor surface may be a surface of the prism or that of a separate sensor element, such as a glass or plastic plate, in optical light-coupling contact with the prism, such as via a refractive index matching medium. In the latter case, the "internally reflective surface" will be a surface of this separate sensor element. In the grating-coupling case, the sensor surface may be integral with the grating element, e.g. be one face of a glass or plastic plate with the grating formed on the opposite face or be a part of the grating. As in the prism case, the sensor element may also be a separate element in optical contact with a grating element.

The sensor element may alternatively be integral with a surface providing optical coupling via refraction or diffraction, such as, for example, be one face of a glass or plastic plate with micro-prisms or Fresnel lenses formed on the opposite face, e.g. as described in WO 92/0542.

With reference to variant (i) above, controlled variation of the beam cross-section may be obtained by "oblique incidence" of the beam at the entrance surface of an ATR-body. By "oblique incidence" is meant that the angle scan only includes angles on one and the same side of the normal to the entrance surface. In this way, the diameter in the plane of incidence of the beam passing through the prism onto the sensor surface will vary during the angle scan so that it is largest for the smallest angle of incidence at the internally reflective surface of the ATR-body, and smallest for the largest angle of incidence, thereby giving a reduced variation of the illuminated area and reducing the dependence of the length of the illuminated area on the sensor surface with the angle of incidence.

While the oblique incidence at the ATR-body, on the one hand, thus will provide for an at least substantially reduced variation of the irradiance of the illuminated area of the sensor surface, such oblique incidence may, on the other hand, give rise to beam walking (as defined above).

For scanner mirrors with symmetric scan mirror angle-amplitudes used with oblique incidence to minimise variation of irradiance, beam walking may be avoided by having the collimated beam pass of a wedge shaped transparent body before reaching the ATR-body to thereby obtain a fixed illuminated area centre.

An orthogonal incidence of the beam at the entrance surface of the ATR-body, as in the prior art system disclosed in the above-mentioned WO 98/34098, and symmetric scan mirror amplitudes also provides a symmetric angle of incidence range (i.e. symmetric angle of incidence amplitude around the centre angle of incidence corresponding to the centre angles of the scanner mirrors), e.g. 70.0 ± 6.0°. However, in an optical design based on "oblique incidence" of the beam at the entrance surface of the ATR-body, and a wedge-shaped transparent body to eliminate beam walking, the angle of incidence amplitudes will be non-symmetric, e.g. ranging from 70.0 + 7.0° to 70.0 - 6.0°.

Alternatively, beam walking of the collimated beam caused by the irradiation variation minimising the oblique incidence surface on the ATR-body may be eliminated by using asymmetric scan-mirror angle amplitudes, the asymmetry of the scan-mirror amplitudes providing the desired fixed illuminated area centre.

In one embodiment, the scanner mirrors comprise first and second oscillating mirrors, the angle scan amplitudes of which are symmetrical around the centre angle of the scanning, which centre angle corresponds to the operational centre angle of incidence range of the collimated beam. Preferably, the scan angle amplitude ratio of the second oscillating mirror to that of the first oscillating mirror is from about 1 to about 10.

In another embodiment, the scanner mirrors comprise first and second rotating mirrors. Preferably, the scan angle amplitude ratio of the second rotating mirror to that of the first rotating mirror is from about 1 to about 10.

As to variant (ii) above, the power of the light beam produced by the light source, i.e. the light output, may be controlled by regulating the drive current/voltage of the light source, and more particularly to increase the drive current/voltage as the angle of incidence at the sensor surface is increased. Alternatively, the light beam may be caused to pass an electromechanical beam intensity attenuator, such as a filter means having an electronically controlled variable attenuating effect on the light intensity of the beam, e.g. a linear polariser rotated in relation to a following p-polariser, or variable neutral density filters. Such filter means may be arranged in the path of either (or possibly both of) the incident or the reflected light beam, preferably before the incident light beam is reflected by the scanning means. When regulating the light source drive current or voltage, or the drive current or voltage for the beam intensity attenuator, a control signal from the photodetector, where the control signal is proportional to the detected irradiance on the detector, can be used in the regulating process.

According to variant (iii) mentioned above, a combination of variants (i) and (ii) may be used. For example, it may be found convenient to use variant (i) for a first range of incident angles, and variant (ii) for a second range of incident angles.

While usually a single light source (e.g. a light emitting diode, or a laser diode) together with a lens system is used to create the collimated beam, the use of a plurality of light sources may also be contemplated to create a plurality of collimated beams to be scanned in parallel by the scanning means. In this way, a plurality of parallel sensor surfaces may be illuminated and sensed. It is, of course, also possible to use two or more light sources to create a combined single beam. These light sources may have identical wavelength or different wavelengths.

As already mentioned, the inventive concept of the present invention as described above, is also applicable to other TIR-based technologies than ATR-spectroscopy. Thus, for instance, rather than measuring the intensity of a totally internally reflected beam of light, fluorescence or phosphorescence emitted from a sensing surface due to excitation by evanescent wave resulting from the total internal reflection may be measured versus angle of incidence. Such fluorescence or phosphorescence may be emitted from either natively fluorescent of phosphorescent sample molecules or molecules labelled with a fluorophore or phosphorophore. Total internal reflection fluorescence is commonly referred to as TIRF.

In SPR-TIRF or SPR-total internal reflection phosphorescence, an SPR-field is used to stimulate the emission of fluorescence or phosphorescence.

Alternatively, light originating from evanescent wave excited scattering at the sensing surface may be measured versus angle of incidence. This technology is usually referred to as STIR (scattered total internal reflection).

The use of TIRF, total internal reflection phosphorescence and STIR, respectively, is described in, for example, US-A-5,313,264.

It is also possible to use any one of the above non-ATR techniques in combination with ATR, i.e. in combination with measuring the intensity of a totally internally reflected light beam.

US-A-6,194,223, for example , discloses a method for detecting an analyte, wherein a first signal from SPR-measurement and a second signal from fluorescence measurement are independently analysed.

WO 98/22808 discloses an SPR apparatus comprising a first detector for detecting light internally reflected from a sensor surface, and a second detector for detecting light scattered or emitted from an analyte bound at the sensor surface.

In the following the invention will be described, by way of example only, with regard to some specific embodiments thereof.

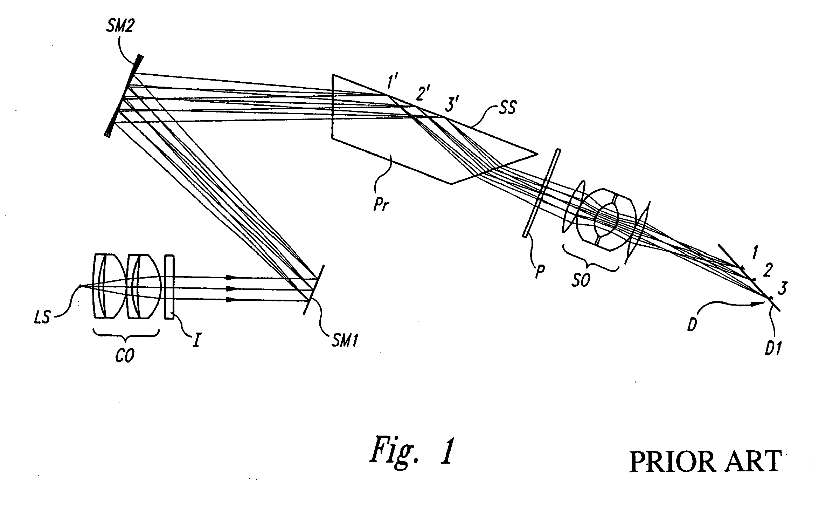

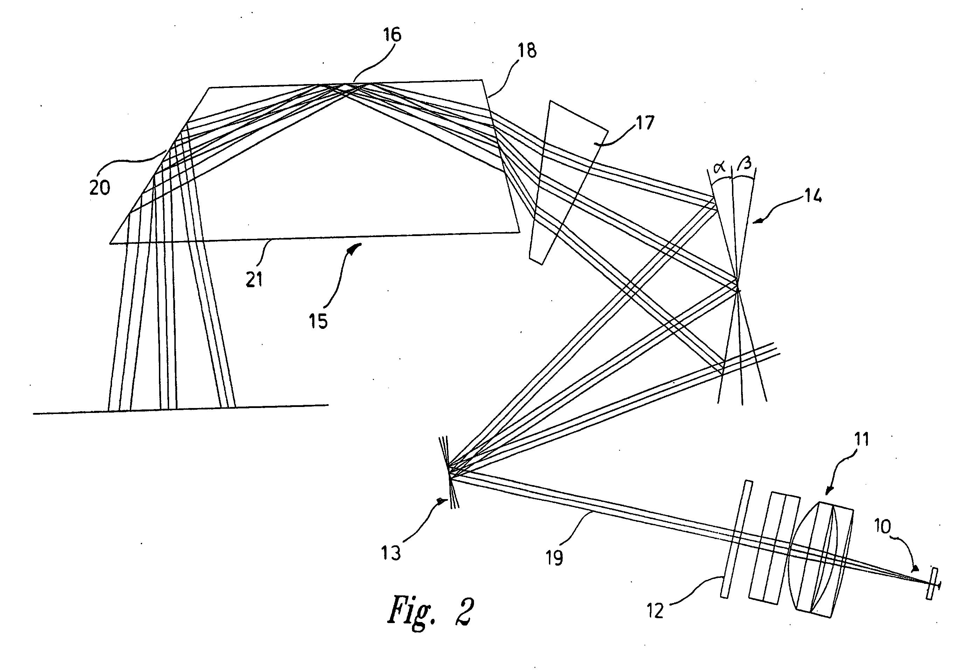

The invention may advantageously be applied to a TIR-based optical system of the general type disclosed in the above-mentioned WO 98/34098 and schematically illustrated in Fig. 1 as briefly described above. Fig. 2 discloses a modification according to the present invention of a part of the prior art system illustrated in Fig. 1. Like the system in Fig. 1, the inventive embodiment of Fig. 2 comprises a light source 10, e.g. a light emitting diode (LED), collimator optics 11, an interference filter 12, a pair of scanning mirrors, namely a first scanning mirror 13 and a second scanning mirror 14, and an ATR-prism 15 with a sensor surface 16. The two scanning mirrors 13 and 14 are arranged to have symmetric scan-mirror angle amplitudes as is shown in Fig. 2 (α = β). Such scanning mirrors are well known in the art, and exemplary systems are described in the above-mentioned WO 98/34098.

The sensor surface 16 may, as is well known in the art, be applied directly on the prism 15 or be provided on a separate element, as described in, for example, EP-B-442922, which element is light-coupled to the prism via an immersion oil or a so-called optointerface as described in, for example, US-A-5,164,589. The sensor surface *per se* may be any of a variety of sensor surfaces and will not be described herein any further. Suffice it to say that exemplary sensor surfaces are described in US-A-5,242,828 and US-A-5,436,161.

In contrast to the prior art system, the optical system of Fig. 2 additionally comprises a wedge-shaped prism 17 inserted between the second scanning mirror 14 and the ATR-prism 15. Also, in the embodiment in Fig. 2, the entrance surface 18 on the ATR-prism 15 for the incident light is inclined in relation to the incident light beam such that the angle of incidence will be oblique over the whole scanned angular range as will be described below.

A beam of collimated light 19 from the light source 10 and collimated optics 11 is reflected by the scanning mirrors 13, 14 via wedge prism 17 into prism 15 where the beam is totally internally reflected at the sensor surface 16. The reflected light is then, in the illustrated case, totally internally reflected at plane prism side 20 to leave the prism through plane prism side 21 parallel to the sensor surface. The reflected light may then, in the same way as in Fig. 1 (but not shown in Fig. 2), pass a polariser and an objective to produce an image on a detector array. For further details on the beam path components following after the prism 15, as well as on the light source and collimator optics, it is referred to the above-mentioned WO 98/34098. It may be noted that it is advantageous to focus part of the light reflected at an area of the sensor surface without sensing function, and/or light reflected at the coupling prism onto a separate part of the detector array or separate detector to determine the momentary incident angle (or wavelength).

In Fig. 2, the collimated beam enters the prism 15 with an oblique incidence angle, which means that all beams during the angle scan impinge on the prism obliquely or, expressed in another way, are all on one and the same side of the normal to the inclined entrance side 18 of prism 15, as opposed to the situation in the prior art system in Fig. 1, where the centre beam impinges orthogonally to the entrance side of the prism.

The oblique incidence in Fig. 2 causes, as is readily appreciated, the length of the intersection area of the beam with the inclined prism entrance surface 18 (length L = [beam diameter(angle)]/cosine(angle)) to be continually decreased as the angle of incidence at the sensor surface 16 is increased, and thereby the length of the illuminated sensor surface area of fixed centre position, is kept mainly constant. In other words, the width of the beam incident at the sensor surface 16 (in the plane of incidence) will vary during the angle scan so that it is largest for the smallest angle of incidence at the sensor surface and smallest for the largest angle of incidence at the sensor surface. The oblique beam entrance into the prism will thus counteract the dependence of the length of the intersection area (and thereby the illuminated sensor surface area) on the cosine(angle)⁻¹ and provide a substantially constant illuminated area and irradiance on the sensor surface during the angle scan.

It is appreciated that when using scan mirrors with symmetric scan angle amplitudes as illustrated in Fig. 2 in combination with an oblique beam entrance onto the ATR-prism to maintain a substantially constant beam intersection area with the sensor surface according to the present invention, the oblique beam incidence may cause beam walking, i.e. a moving centre of the illuminated area. This is, however, obviated by wedge prism 17 which has a geometry and position selected to counteract the asymmetry in the angle scan caused by the oblique beam entrance into the prism and produce a symmetric angle scan. The appropriate wedge geometry, including angle of entrance, thickness and angle of exit, to obtain such a fixed illuminated area centre and eliminate beam walking may readily be selected by the skilled person in each particular situation, bearing in mind that the use of wedge prisms (anamorphic prisms) in optical systems is *per se* known in the prior art.

For instance, beam shaping based on anamorphic prisms is described in, for example, O'shea, Donald C., "Elements of Modem Optical Design", Wiley & Sons, Inc. 1985, pages 259-262; and Marshall, Gerald F., "Laser Beam Scanning", Marcel Dekker, Inc. 1985, pages 346-349. A prism couple is mounted in a fixed (non-scanned) collimated beam with the purpose of obtaining a collimated beam of new cross-section ratio, the changed beam also being fixed and parallel with the first beam. An example hereof is the transformation of the elliptical output of a diode laser into a circular beam, such as e.g. in commercial collimation laser pens.

Also, beam scanning based on wedge prisms is described in Marshall, Gerald F., "Scanning Devices and Systems", Applied Optics and Optical Engineering vol. vi, Academic Press Inc, 1980, pages 248-250. A collimated beam incident onto a prism is rotated about an axis collinear with the incident beam for the purpose of refracting this beam and creating a spatial cone in space formed by the swept refracted emergent collimated beam. Further, it is described how, by the same principle, two wedge prisms contra-rotating in tandem can be used to create an elliptical cone of a swept beam position on a screen.

A main advantage of symmetric mirror scan angle-amplitudes is the resulting approximately identical angle of incidence vs. time relationship, which provides a distribution of measured angle(time)-data symmetrical around the scan angle centre, which in turn improves the speed and accuracy of the computed SPR-angle vs. time data. Another advantage of symmetric scan angle-amplitudes is a less complex driver electronics for the two synchronised mirror scanners as well as less wear of the scanner bearing design, i.e. less torsional stress, due to a symmetrical torsional (turning) moment.

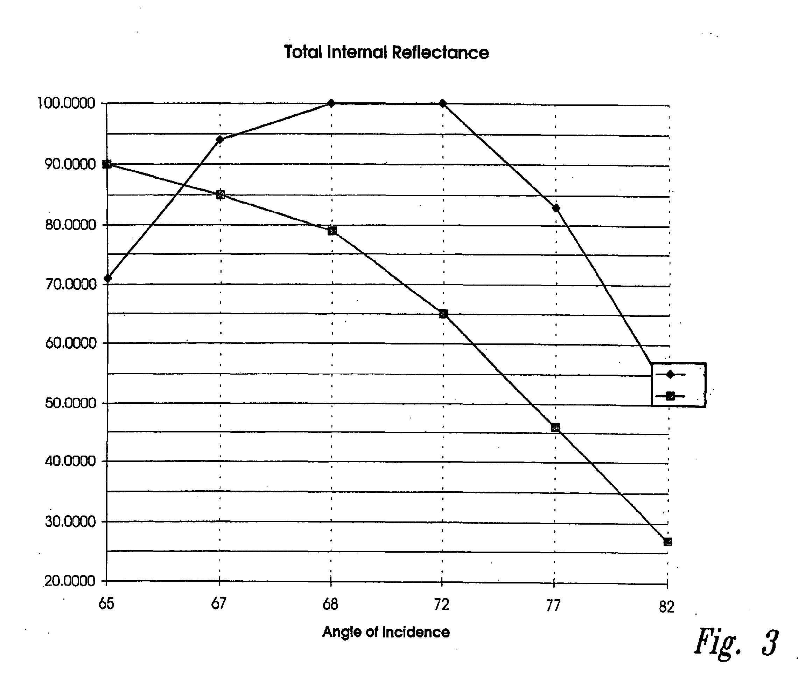

Fig. 3 shows the variation of the reflectance versus incident angle for an optical set-up according to Fig. 2 (curve A) as compared with that for a prior art set-up with orthogonal incidence and symmetric scan angle amplitudes (curve B). As demonstrated by Fig. 3, the embodiment of Fig. 2 causes the dependence of the reflectance on the incident angle to have a maximum reflectance within a more or less symmetrical curve shape (A) rather than the monotone sloping curve (B) obtained in the prior art. It is appreciated by the skilled person that by the use of a suitable computer software algorithm, measurement data obtained with the apparatus in Fig. 2 may be adjusted for this substantially reduced and controlled variation of the reflectance during the angle scan.

As mentioned above, computer software algorithms have been used in the prior art to normalize the TIR curve in SPR biosensor instruments. For the commercial BIACORE^{®} instruments referred to above (i.e. static optical configuration), such a normalisation procedure includes:
a) Filtering of measured reflectance data vs. time at each angle within the simultaneous angle of incidence range in order to obtain a continuous TIR-data curve (total reflectance vs. angle curve or plot). Such averaging over time of the detector response signal reduces the temporal scatter/noise in the TIR-data. The less scattered data, the faster is the filtering data processing (calculations) thereof into a curve smooth enough for high accuracy detection of dips and peaks.
b) Curve fitting an analytical curve to the filtered TIR-curve. The less complex curve shape, the faster, less complex, and more accurate curve fitting data processing (calculation).
c) Normalisation, calculation of correction data for the analytical TIR-data curve fit. The normalisation-correction data-matrix is stored in a computer memory, and is added to the analytical TIR-data curve to provide a normalised analytical TIR-data (as constant total internal reflectance as possible as function of angle of incidence).

When the sample is added and bound to the SPR-sensor surface, it causes a minimum in the measured TIR-curve, the resonance curve. The resonance curve's reflectance data are filtered in real-time and the normalisation-data matrix is added. In a real-time computer process, an analytical curve is fitted to this normalised SPR-curve, and the curve's angular position is calculated in real-time. A normalised TIR-curve improves the measurement accuracy of the angle position of the SPR- reflectance dip (or converted to reflectance peak). If no normalisation is done, the slope and low spatial frequency scatter/noise in the TIR-data will disturb the curve-shape of the SPR-curve and limit the accuracy of measured absolute and changes in SPR-curve shape parameters (reflectance minimum/minima, reflectance peak/peaks, curve-dip/peak width) or SPR-angles, and of SPR-angle vs. time kinetic measurements.

It is appreciated that such software may be improved to also adjust for the variation of the reflectance during the angle scan as obtained with the embodiment in Fig. 2.

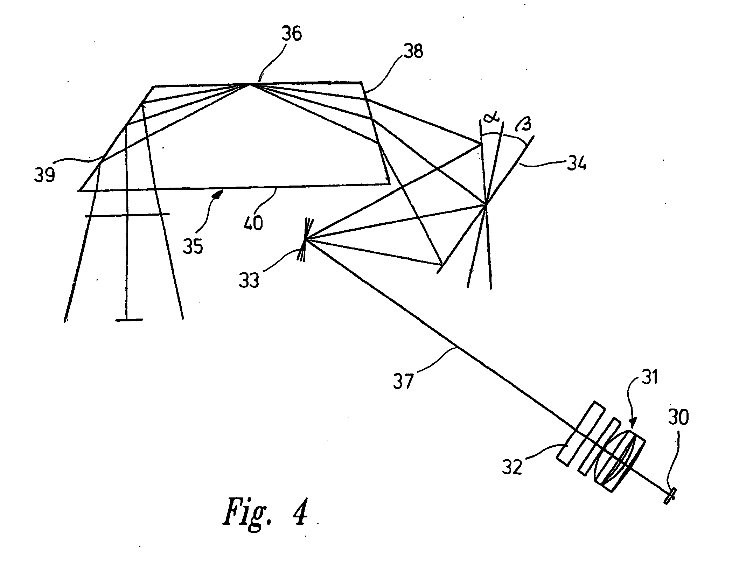

An alternative embodiment of the present invention is shown in Fig. 4. Like the embodiment in Fig. 2, it comprises a light source 30, collimator optics 31, an interference filter 32, a first scanning mirror 33, a second scanning mirror 34, and an ATR-prism 35 with a sensing surface 36. Also, in conformity with the embodiment in Fig. 2, a collimated light beam 37 from the light source 30 and collimator optics 31 is reflected by the scanning mirrors 33, 34 to impinge at an oblique incident angle at the entrance surface 38 of the prism 35 to thereby counteract variation of the illuminated area of the sensor surface 36 during the angle scan.

In the embodiment of Fig. 4, however, in order to eliminate beam walking, a fixed illuminated area centre is ensured by the scan-mirror angle amplitudes being asymmetric (as indicated in the Figure: α ≠ β) in a way that counteracts the asymmetry caused by the oblique incidence at the ATR-prism. This asymmetry of the scan-mirror angle amplitudes thus replaces the wedge prism 17 in Fig. 2. Techniques for asymmetric scan-mirror angle amplitudes are known *per se* in the art.

As in the embodiment of Fig. 2, the beam totally reflected at the sensing surface 36 is then reflected at plane prism side 39 and exits the prism 35 through prism side 40 to be imaged on a detector array.

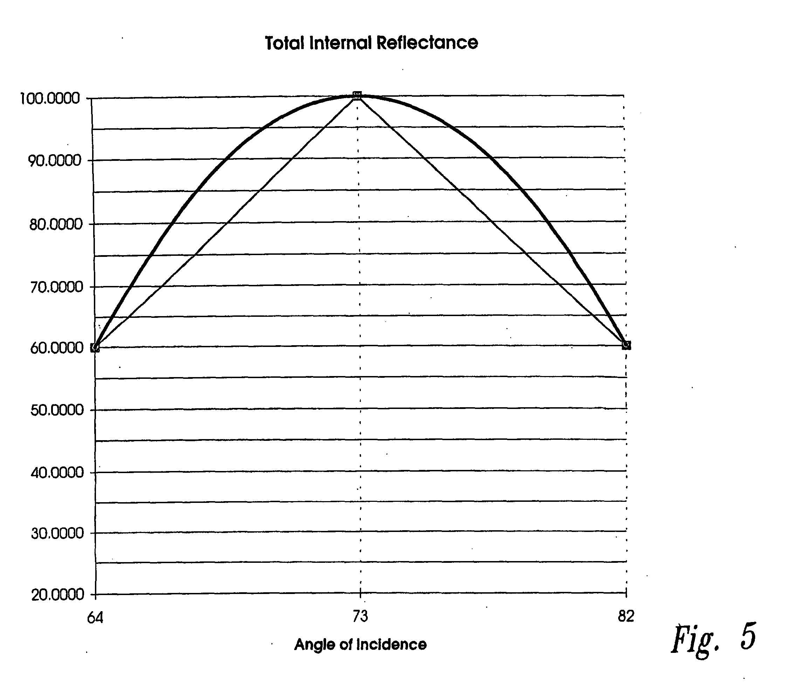

The TIR-curve obtained with the embodiment in Fig. 4 is illustrated by the diagram of Fig. 5. In the same way as for the TIR-curve obtained for the embodiment in Fig. 4, the TIR-curve in Fig. 5 may be normalised by a suitable computer software algorithm.

## Claims

1. An optical apparatus for total internal reflection (TIR) spectroscopy comprising:
a transparent body (15; 35) having a first entrance surface (18; 38) for incident electromagnetic radiation (19; 37), a second plane internally reflective surface (16; 36) for reflecting radiation transmitted from the first surface through the transparent body, the second surface (16; 36) forming a sensor surface, and a third exit surface (21; 40) through which electromagnetic radiation reflected at the second surface (16; 36) exits the transparent body (15; 35),
at least one source of electromagnetic radiation (10; 30),
collimating means (11; 31) for collimating radiation emitted from the at least one source of electromagnetic radiation (10; 30) to at least one beam of collimated electromagnetic radiation (19; 37),
optical scanning means (13, 14; 33, 34), arranged between the collimating means (11; 31) and the transparent body (15; 35), for directing at least part of the collimated electromagnetic radiation (19; 37) to the first entrance surface (18; 38) of the transparent body (15; 35) so that the radiation illuminates an area or areas of the second surface (16; 36) and is internally reflected, and sequentially or continuously scanning the incident angle of the radiation at the second surface (16; 36) over an angular range, the illuminated area or areas having an at least substantially fixed centre position, and
at least one detector (D) for detecting electromagnetic radiation exiting from the transparent body (15; 35),
**characterized in that** the apparatus further comprises:
means for varying the length of the intersection area of the at least one beam of collimated electromagnetic radiation (19; 37) incident on the first entrance surface (18; 38) of the transparent body (15; 35), in dependence of the incident angle at the second surface (16; 36) during the angular scan, so that the length of the illuminated area or areas of fixed centre position of the second surface (16; 36) is kept substantially constant, so as to provide a substantially constant illuminated area and irradiance on the second surface (16; 36) during the angular scan, and
wherein the first surface (18; 38) of the transparent body (15; 35) is plane and the means for varying the cross-sectional area's length of the at least one beam of collimated electromagnetic radiation (19; 37) comprise means for directing the beam or beams (19; 37) at an oblique angle of incidence onto the first surface (18; 38) such that the angle of incidence onto the first surface (18; 38) is continuously decreased as the angle of incidence at the second internally reflective surface (16; 36) is increased.

2. The apparatus of claim 1, **characterized in that** the angle scan amplitudes provided by the optical scanning means (13, 14; 33, 34) are symmetrical around the centre angle of scanning.

3. The apparatus of claim 2, **characterized in that** a plane-sided wedge-shaped plane-sided prism (17) is arranged between the optical scanning means (13, 14; 33, 34) and the transparent body (15; 35) and fixed with regard to the transparent body (15; 35) and formed to vary the length of the intersection area of the at least one beam of collimated electromagnetic radiation (19; 37) incident on the first entrance surface (18; 38) of the transparent body (15; 35), in dependence of the incident angle from the scanning means (13, 14; 33, 34) during the angular scan.

4. The apparatus of any one of claims 1 to 3, **characterized in that** the optical scanning means (13, 14; 33, 34) comprise first and second oscillating mirrors (13, 14; 33, 34), the first oscillating mirror (13, 33) arranged to reflect the at least one beam of collimated electromagnetic radiation (19; 37) onto the second oscillating mirror (14; 34).

5. The apparatus of claim 4, **characterized in that** the ratio of the scan angle amplitude of the second oscillating mirror (14; 34) to that of the first oscillating mirror (13; 33) is from about 1 to about 10.

6. The apparatus of any one of claims 1 to 3, **characterized in that** the optical scanning means (13, 14; 33, 34) comprise first and second rotating mirrors the first rotating mirror arranged to reflect the at least one beam of collimated electromagnetic radiation (19; 37) onto the second rotating mirror.

7. The apparatus of claim 6, **characterized in that** the ratio of the scan angle amplitude of the second rotating mirror to that of the first rotating mirror is from about 1 to about 10.

8. The apparatus of claim 1, **characterized in that** the angle scan amplitudes provided by the optical scanning means (13, 14; 33, 34) are asymmetrical around the centre angle of scanning.

9. The apparatus of claim 8, **characterized in that** the optical scanning means (13, 14; 33, 34) comprise first and second oscillating mirrors (13, 14; 33, 34), the first mirror (13, 33) arranged to reflect the at least one beam of collimated electromagnetic radiation (19; 37) onto the second mirror (14, 34).

10. The apparatus of claim 9, **characterized in that** the ratio of the scan angle amplitude of the second oscillating mirror (14; 34) to that of the first oscillating mirror (13; 33) is from about I to about 10.

11. The apparatus of claim 8, **characterized in that** the optical scanning means (13, 14; 33, 34) comprise first and second rotating mirrors, the firs rotating mirror arranged to reflect the at least one beam of collimated electromagnetic radiation (19; 37) onto the second rotating mirror.

12. The apparatus of claim 11, **characterized in that** the ratio of the scan angle amplitude of the second rotating mirror to that of the first rotating mirror is from about 1 to about 10.

13. The apparatus of claim 1, **characterized in that** it comprises means for varying the radiation power of the incident or reflected beam.

14. The apparatus of claim 13, **characterized in that** the radiation power of the beam is varied before the beam is reflected by the optical scanning means (13, 14; 33, 34).

15. The apparatus of claim 14, **characterized in that** the means for varying the radiation power of the at least one beam of collimated electromagnetic radiation (19; 37) comprise means for regulating the drive current or voltage of the at least one source of electromagnetic radiation (10; 30).

16. The apparatus of claim 15, **characterized in that** the means for regulating the drive current or voltage of the at least one source of electromagnetic radiation (10; 30) comprises a control signal proportional to the detected intensity of the at least one beam on the detector.

17. The apparatus of claim 13 or 14, **characterized in that** the means for varying the power of the at least one beam of collimated electromagnetic radiation (19; 37) comprise an electro-mechanical beam power attenuator.

18. The apparatus of claim 17, **characterized in that** the electro-mechanical beam power attenuator is selected from co-operating linear polarisers and variable density filters.

19. The apparatus of any one of claims 1 to 18 for attenuated total reflection (ATR) spectroscopy, **characterized in that** the detector or detectors (D) are arranged to detect electromagnetic radiation totally internally reflected at the second surface (16; 36) and exiting from the third surface (21; 40) of the transparent body (15; 35).

20. The apparatus of any one of claims 1 to 18, **characterized in that** the detector or detectors (D) are arranged to detect electromagnetic radiation originating from evanescent wave stimulated fluorescence or phosphorescence of a substance or substances in contact with the second surface (16; 36) of the transparent body (15; 35).

21. The apparatus of any one of claims 1 to 18, **characterized in that** the detector or detectors (D) are arranged to detect electromagnetic radiation originating from scattering at the second surface (16; 36) of the transparent body (15; 35).

22. The apparatus of any one of claims 1 to 18, **characterized in that** the detector or detectors (D) are arranged to detect at least two of electromagnetic radiation totally internally reflected at the second surface (16; 36), electromagnetic radiation originating from evanescent wave stimulated fluorescence or phosphorescence, and electromagnetic radiation originating from scattering at the second surface (16; 36) of the transparent body (15; 35).

23. A method of performing total internal reflection (TIR) based spectroscopy, which method comprises:
irradiating at least one area of a second plane surface (16; 36) of a transparent body (15; 35) with at least one collimated beam of electromagnetic radiation (19; 37) so that the radiation is totally internally reflected at the second plane surface (16; 36), the second plane surface (16; 36) forming a sensor surface,
imaging onto a respective two-dimensional detector array (D) at least one of (i) radiation internally reflected from the illuminated area or areas, (ii) fluorescent or phosphorescent radiation from the illuminated area or areas caused by evanescent wave stimulation, and (iii) radiation originating from evanescent wave stimulated scattering at the illuminated area or areas,
sequentially or continuously scanning the incident angle of the radiation at the second plane surface (16; 36) over an angular range, the illuminated area or areas having an at least substantially fixed centre position during the angular scan,
measuring at at least a number of incident angles of the radiation reflected at the second plane surface (16; 36) of the transparent body (15; 35), the intensities of the radiation imaged on different parts of the detector array (D), and
determining from the detected radiation intensities at the different incident angles at the second plane surface (16; 36), at least one of an optical thickness image, a refractive index image, a surface concentration image of the surface, and variation of such images with time,
**characterized by** continuously varying the length of the intersection area of the at least one beam of collimated electromagnetic radiation (19; 37) incident on a first plane entrance surface (18; 38) of the transparent body (15; 35), in dependence of the incident angle at the second plane surface (16; 36) during the angular scan, by directing the beam or beams (19; 37) at an oblique angle of incidence onto the first plane entrance surface (18; 38) such that the angle of incidence onto the first plane entrance surface (18; 38) is continuously decreased as the angle of incidence at the second plane surface (16; 36) in increased so that the length of the illuminated area or areas of fixed centre position of the second plane surface (16; 36) is kept substantially constant, so as to provide a substantially constant illuminated area and irradiance of the second plane surface (16; 36) second during the angular scan.

24. The method of claim 23, **characterized in that** the method further comprises the step of varying the power of the at least one beam of collimated electromagnetic radiation (19; 37) incident or reflected from the second plane surface (16; 36).

25. The method of claim 24, **characterized in that** the power of the at least one beam (19; 37) is varied before scanning the beam.

26. The method of claim any one of claims 24 to 26 for performing ATR-spectroscopy, **characterized in that** radiation internally reflected from the illuminated area or areas is imaged on the detector array (D).

27. The method of any one of claims 23 to 26, **characterized in that** the method is performed at at least two different wavelengths.

## Patentansprüche

1. Optische Vorrichtung für Interne-Totalreflexions-(TIR: Total Internal Reflection)-Spektroskopie, umfassend:
einen transparenten Körper (15; 35) mit einer ersten Eintrittsfläche (18; 38) für einfallende elektromagnetische Strahlung (19; 37), einer zweiten planen intern reflektierenden Fläche (16; 36) zum Reflektieren von Strahlung, die von der ersten Fläche aus durch den transparenten Körper weitergeleitet wird, wobei die zweite Fläche (16; 36) eine Sensorfläche bildet, und einer dritten Austrittsfläche (21; 40), durch die an der zweiten Fläche (16; 36) reflektierte elektromagnetische Strahlung den transparenten Körper (15; 35) verlässt, zumindest eine Quelle elektromagnetischer Strahlung (10; 30), Kollimationsmittel (11; 31) zum Kollimieren von Strahlung, die von der zumindest einen Quelle elektromagnetischer Strahlung (10; 30) ausgesendet wird, zu zumindest einem Strahl kollimierter elektromagnetischer Strahlung (19; 37),
optische Abtastmittel (13, 14; 33, 34), angeordnet zwischen den Kollimationsmitteln (11; 31) und dem transparenten Körper (15; 35), zum Lenken zumindest eines Teils der kollimierten elektromagnetischen Strahlung (19; 37) zur ersten Eintrittsfläche (18; 38) des transparenten Körpers (15; 35), so dass die Strahlung einen Bereich oder Bereiche der zweiten Fläche (16; 36) beleuchtet und intern reflektiert wird, und zum sequentiellen oder kontinuierlichen Abtasten des Einfallswinkels der Strahlung an der zweiten Fläche (16; 36) über einen Winkelbereich, wobei der beleuchtete Bereich oder die beleuchteten Bereiche eine zumindest im Wesentlichen fixe Mittelpunktsposition aufweist bzw. aufweisen, und
zumindest einen Detektor (D) zum Erfassen elektromagnetischer Strahlung, d ie aus dem transparenten Körper (15; 35) austritt,
**dadurch gekennzeichnet, dass** die Vorrichtung weiterhin umfasst:
Mittel zum Variieren der Länge der Schnittfläche des zumindest einen auf der ersten Eintrittsfläche (18; 38) des transparenten Körpers (15; 35) einfallenden Strahls kollimierter elektromagnetischer Strahlung (19; 37), in Abhängigkeit vom Einfallswinkel an der zweiten Fläche (16; 36) während der Winkelabtastung, so dass die Länge des beleuchteten Bereichs oder der beleuchteten Bereiche mit fixer Mittelpunktsposition der zweiten Fläche (16; 36) im Wesentlichen konstant gehalten wird, um einen beleuchteten Bereich und eine Bestrahlungsstärke, die im Wesentlichen konstant sind, auf der zweiten Fläche (16; 36) während der Winkelabtastung bereitzustellen, und
wobei die erste Fläche (18; 38) des transparenten Körpers (15; 35) plan ist und die Mittel zum Variieren der Querschnittsflächenlänge des zumindest einen Strahls kollimierter elektromagnetischer Strahlung (19; 37) Mittel zum Lenken des Strahls oder der Strahlen (19; 37) in einem schiefen Einfallswinkel auf die erste Fläche (18; 38) umfasst, so dass der Winkel des Einfalls auf die erste Fläche (18; 38) kontinuierlich verkleinert wird, während der Einfallswinkel an der zweiten intern reflektierenden Fläche (16; 36) vergrößert wird.

2. Vorrichtung nach Anspruch 1, **dadurch gekennzeichnet, dass** die von den optischen Abtastmitteln (13, 14; 33, 34) bereitgestellten Winkelabtastamplituden symmetrisch um den Mittelpunktswinkel der Abtastung sind.

3. Vorrichtung nach Anspruch 2, **dadurch gekennzeichnet, dass** ein keilförmiges Planseitenprisma (17) zwischen den optischen Abtastmitteln (13, 14; 33, 34) und dem transparenten Körper (15; 35) angeordnet ist und in Bezug auf den transparenten Körper (15; 35) fix ist und ausgebildet ist, um die Länge der Schnittfläche des zumindest einen Strahls kollimierter elektromagnetischer Strahlung (19; 37), der auf der ersten Eintrittsfläche (18; 38) des transparenten Körpers (15; 35) einfällt, in Abhängigkeit vom Einfallswinkel von den Abtastmitteln (13, 14; 33, 34) aus während der Winkelabtastung zu variieren.

4. Vorrichtung nach einem der Ansprüche 1 bis 3, **dadurch gekennzeichnet, dass** die optischen Abtastmittel (13, 14; 33, 34) einen ersten und einen zweiten oszillierenden Spiegel (13, 14; 33, 34) umfassen, wobei der erste oszillierende Spiegel (13; 33) angeordnet ist, um den zumindest einen Strahl kollimierter elektromagnetischer Strahlung (19; 37) auf den zweiten oszillierenden Spiegel (14; 34) zu reflektieren.

5. Vorrichtung nach Anspruch 4, **dadurch gekennzeichnet, dass** das Verhältnis der Abtastwinkelamplitude des zweiten oszillierenden Spiegels (14; 34) zu jener des ersten oszillierenden Spiegels (13; 33) etwa 1 zu etwa 10 ist.

6. Vorrichtung nach einem der Ansprüche 1 bis 3, **dadurch gekennzeichnet, dass** die optischen Abtastmittel (13, 14; 33, 34) einen ersten und einen zweiten rotierenden Spiegel umfassen, wobei der erste rotierende Spiegel angeordnet ist, um den zumindest einen Strahl kollimierter elektromagnetischer Strahlung (19; 37) auf den zweiten rotierenden Spiegel zu reflektieren.

7. Vorrichtung nach Anspruch 6, **dadurch gekennzeichnet, dass** das Verhältnis der Abtastwinkelamplitude des zweiten rotierenden Spiegels zu jener des ersten rotierenden Spiegels etwa 1 zu etwa 10 ist.

8. Vorrichtung nach Anspruch 1, **dadurch gekennzeichnet, dass** die von den optischen Abtastmitteln (13, 14; 33, 34) bereitgestellten Winkelabtastamplituden asymmetrisch um den Mittelpunktswinkel der Abtastung sind.

9. Vorrichtung nach Anspruch 8, **dadurch gekennzeichnet, dass** die optischen Abtastmittel (13, 14; 33, 34) einen ersten und einen zweiten oszillierenden Spiegel (13, 14; 33, 34) umfassen, wobei der erste Spiegel (13; 33) angeordnet ist, um den zumindest einen Strahl kollimierter elektromagnetischer Strahlung (19; 37) auf den zweiten Spiegel (14; 34) zu reflektieren.

10. Vorrichtung nach Anspruch 9, **dadurch gekennzeichnet, dass** das Verhältnis der Abtastwinkelamplitude des zweiten oszillierenden Spiegels (14; 34) zu jener des ersten oszillierenden Spiegels (13; 33) etwa 1 zu etwa 10 ist.

11. Vorrichtung nach Anspruch 8, **dadurch gekennzeichnet, dass** die optischen Abtastmittel (13, 14; 33, 34) einen ersten und einen zweiten rotierenden Spiegel umfassen, wobei der erste rotierende Spiegel angeordnet ist, um den zumindest einen Strahl kollimierter elektromagnetischer Strahlung (19; 37) auf den zweiten rotierenden Spiegel zu reflektieren.

12. Vorrichtung nach Anspruch 11, **dadurch gekennzeichnet, dass** das Verhältnis der Abtastwinkelamplitude des zweiten rotierenden Spiegels zu jener des ersten rotierenden Spiegels etwa 1 zu etwa 10 ist.

13. Vorrichtung nach Anspruch 1, **dadurch gekennzeichnet, dass** sie Mittel zum Variieren der Strahlungsleistung des einfallenden oder reflektierten Strahls umfasst.

14. Vorrichtung nach Anspruch 13, **dadurch gekennzeichnet, dass** die Strahlungsleistung des Strahls variiert wird, bevor der Strahl von den optischen Abtastmitteln (13, 14; 33, 34) reflektiert wird.

15. Vorrichtung nach Anspruch 14, **dadurch gekennzeichnet, dass** die Mittel zum Variieren der Strahlungsleistung des zumindest eines Strahls kollimierter elektromagnetischer Strahlung (19; 37) Mittel zum Regulieren des Ansteuerstroms oder der Ansteuerspannung der zumindest einen Quelle elektromagnetischer Strahlung (10; 30) umfassen.

16. Vorrichtung nach Anspruch 15, **dadurch gekennzeichnet, dass** die Mittel zum Regulieren des Ansteuerstroms oder der Ansteuerspannung der zumindest einen Quelle elektromagnetischer Strahlung (10; 30) ein Steuer- bzw. Regelsignal umfassen, das proportional zur erfassten Intensität des zumindest einen Strahls auf dem Detektor ist.

17. Vorrichtung nach Anspruch 13 oder 14, **dadurch gekennzeichnet, dass** die Mittel zum Variieren der Leistung des zumindest einen Strahls kollimierter elektromagnetischer Strahlung (19; 37) einen elektromechanischen Strahlleistungsabschwächer umfassen.

18. Vorrichtung nach Anspruch 17, **dadurch gekennzeichnet, dass** der elektromechanische Strahlleistungsabschwächer aus zusammenwirkenden Linearpolarisatoren und Filtern mit variabler Dichte gewählt ist.

19. Vorrichtung nach einem der Ansprüche 1 bis 18 für Attenuierte-Totalreflexions-(ATR)-Spektroskopie, **dadurch gekennzeichnet, dass** der Detektor oder die Detektoren (D) angeordnet ist bzw. sind, um an der zweiten Fläche (16; 36) intern totalreflektierte und aus der dritten Fläche (21; 40) des transparenten Körpers (15; 35) austretende elektromagnetische Strahlung zu erfassen.

20. Vorrichtung nach einem der Ansprüche 1 bis 18, **dadurch gekennzeichnet, dass** der Detektor oder die Detektoren (D) angeordnet ist bzw. sind, um elektromagnetische Strahlung zu erfassen, die von Evaneszenzwellen-angeregter Fluoreszenz oder Phosphoreszenz von einer Substanz oder Substanzen in Kontakt mit der zweiten Fläche (16; 36) des transparenten Körpers (15; 35) herrührt.

21. Vorrichtung nach einem der Ansprüche 1 bis 18, **dadurch gekennzeichnet, dass** der Detektor oder die Detektoren (D) angeordnet ist bzw. sind, um elektromagnetische Strahlung zu erfassen, die von Streuung an der zweiten Fläche (16; 36) des transparenten Körpers (15; 35) herrührt.

22. Vorrichtung nach einem der Ansprüche 1 bis 18, **dadurch gekennzeichnet, dass** der Detektor oder die Detektoren (D) angeordnet ist bzw. sind, um zumindest zwei zu erfassen von an der zweiten Fläche (16; 36) intern totalreflektierter elektromagnetischer Strahlung, elektromagnetischer Strahlung, die von Evaneszenzwellen-angeregter Fluoreszenz oder Phosphoreszenz herrührt, und elektromagnetischer Strahlung, die von Streuung an der zweiten Fläche (16; 36) des transparenten Körpers (15; 35) herrührt.

23. Verfahren zur Durchführung auf interner Totalreflexion (TIR: Total Internal Reflection) beruhender Spektroskopie, welches Verfahren umfasst:
Bestrahlen zumindest eines Bereichs einer zweiten planen Fläche (16; 36) eines transparenten Körpers (15; 35) mit zumindest einem kollimierten Strahl elektromagnetischer Strahlung (19; 37), so dass die Strahlung an der zweiten planen Fläche (16; 36) intern totalreflektiert wird, wobei die zweite plane Fläche (16; 36) eine Sensorfläche bildet,
Abbilden, auf einen jeweiligen zweidimensionalen Detektorarray (D), zumindest einer Strahlung von (i) Strahlung, die von dem oder den beleuchteten Bereich(en) intern reflektiert wird, (ii) fluoreszierender oder phosphoreszierender Strahlung aus dem oder den beleuchteten Bereich(en), die durch Evaneszenzwellenanregung bewirkt wird, und (iii) Strahlung, die von Evaneszenzwellen-angeregter Streuung an dem oder den beleuchteten Bereich(en) herrührt,
sequentielles oder kontinuierliches Abtasten des Einfallswinkels der Strahlung an der zweiten planen Fläche (16; 36) über einen Winkelbereich, wobei der oder die beleuchtete(n) Bereich(e) eine zumindest im Wesentlichen fixe Mittelpunktsposition während der Winkelabtastung aufweist bzw. aufweisen, Messen, bei zumindest einer Anzahl von Einfallswinkeln der an der zweiten planen Fläche (16; 36) des transparenten Körpers (15; 35) reflektierten Strahlung, der Intensitäten der auf verschiedene Teile des Detektorarrays (D) abgebildeten Strahlung, und
Bestimmen, anhand der erfassten Strahlungsintensitäten bei den unterschiedlichen Einfallswinkeln an der zweiten planen Fläche (16; 36), zumindest eins von einem Optische-Dicke-Bild, einem Brechungsindexbild, einem Oberflächenkonzentrations-bild der Oberfläche, und zeitlicher Veränderung solcher Bilder,
**gekennzeichnet durch** kontinuierliches Variieren der Länge der Schnittfläche des zumindest einen Strahls kollimierter elektromagnetischer Strahlung (19; 37), der auf einer ersten planen Eintrittsfläche (18; 38) des transparenten Körpers (15; 35) einfällt, in Abhängigkeit vom Einfallswinkel an der zweiten planen Fläche (16; 36) während der Winkelabtastung, **durch** Lenken des Strahls oder der Strahlen (19; 37) in einem schiefen Einfallswinkel auf die erste plane Eintrittsfläche (18; 38) so, dass der Einfallswinkel auf die erste plane Eintrittsfläche (18; 38) kontinuierlich verkleinert wird, während der Einfallswinkel an der zweiten planen Fläche (16; 36) vergrößert wird, so dass die Länge des beleuchteten Bereichs oder der beleuchteten Bereiche mit fixer Mittelpunktsposition der zweiten planen Fläche (16; 36) im Wesentlichen konstant gehalten wird, um einen im Wesentlichen konstanten beleuchteten Bereich und eine im Wesentlichen konstante Stärke der Bestrahlung der zweiten planen Fläche (16; 36) während der Winkelabtastung bereitzustellen.

24. Verfahren nach Anspruch 23, **dadurch gekennzeichnet, dass** das Verfahren weiterhin den Schritt des Variierens der Leistung des zumindest einen einfallenden oder von der zweiten planen Fläche (16; 36) reflektierten Strahls kollimierter elektromagnetischer Strahlung (19; 37) umfasst.

25. Verfahren nach Anspruch 24, **dadurch gekennzeichnet, dass** die Leistung des zumindest einen Strahls (19; 37) vor Abtasten des Strahls variiert wird.

26. Verfahren nach einem der Ansprüche 24 bis 25 zur Durchführung von ATR-Spektroskopie, **dadurch gekennzeichnet, dass** von dem oder den beleuchteten Bereich(en) intern reflektierte Strahlung auf dem Detektorarray (D) abgebildet wird.

27. Verfahren nach einem der Ansprüche 23 bis 26, **dadurch gekennzeichnet, dass** das Verfahren bei zumindest zwei unterschiedlichen Wellenlängen durchgeführt wird.

## Revendications

1. Dispositif optique destiné à mettre en oeuvre la spectroscopie par réflexion interne totale (RIT) comprenant :
un corps transparent (15 ; 35) présentant une première surface d'entrée (18 ; 38) pour un rayonnement électromagnétique incident (19 ; 37), une deuxième surface plane réfléchissant de manière interne (16 ; 36) destinée à réfléchir un rayonnement transmis à partir de la première surface à travers le corps transparent, la deuxième surface (16 ; 36) formant une surface de détection, et une troisième surface de sortie (21 ; 40) par l'intermédiaire de laquelle le rayonnement électromagnétique réfléchi par la deuxième surface (16 ; 36) sort du corps transparent (15 ; 35) ;
au moins une source de rayonnement électromagnétique (10 ; 30), des moyens de collimation (11 ; 31) destinés à collimater le rayonnement émis à partir de la ou des sources de rayonnement électromagnétique (10 ; 30) sur au moins un faisceau de rayonnement électromagnétique collimaté (19 ; 37), des moyens de balayage optiques (13, 14 ; 33, 34), agencés entre le moyen de collimation (11 ; 31) et le corps transparent (15 ; 35), afin de diriger au moins une partie du rayonnement électromagnétique collimaté (19 ; 37) sur la première surface d'entrée (18 ; 38) du corps transparent (15 ; 35) de telle sorte que le rayonnement éclaire une zone ou des zones de la deuxième surface (16 ; 36) et est réfléchi de manière interne, et de balayer de manière séquentielle ou continue l'angle d'incidence du rayonnement au niveau de la deuxième surface (16 ; 36) sur une plage angulaire, la zone ou les zones éclairées présentant une position centrale au moins sensiblement fixe, et au moins un détecteur (D) destiné à détecter le rayonnement électromagnétique sortant du corps transparent (15 ; 35),
**caractérisé en ce que** le dispositif comprend, en outre :
des moyens destinés à modifier la longueur de la zone d'intersection du ou des faisceaux de rayonnement électromagnétique collimatés (19 ; 37) incidents sur la première surface d'entrée (18 ; 38) du corps transparent (15 ; 35), en fonction de l'angle d'incidence au niveau de la deuxième surface (16 ; 36) au cours du balayage angulaire, de telle sorte que la longueur de la zone ou des zones éclairées de la position centrale fixe de la deuxième surface (16 ; 36) est maintenue sensiblement constante, de manière à assurer des zone éclairée et densité de flux sensiblement constantes sur la deuxième surface (16 ; 36) au cours du balayage angulaire, et
dans lequel la première surface (18 ; 38) du corps transparent (15 ; 35) est plane et les moyens destinés à modifier la longueur de la zone de section transversale du ou des faisceaux de rayonnement électromagnétique collimatés (19 ; 37) comprend des moyens destinés à diriger le ou les faisceaux (19 ; 37) sous un angle d'incidence oblique sur la première surface (18 ; 38) de telle sorte que l'angle d'incidence par rapport à la première surface (18 ; 38) diminue de manière continue lorsque l'angle d'incidence par rapport à la deuxième surface réfléchissant de manière interne (16 ; 36) augmente.

2. Dispositif selon la revendication 1, **caractérisé en ce que** les amplitudes de balayage angulaire assurées par les moyens de balayage optiques (13, 14 ; 33, 34) sont symétriques par rapport à l'angle de balayage central.

3. Dispositif selon la revendication 2, **caractérisé en ce qu'**un prisme à face plane en forme de coin à face plane (17) est agencé entre les moyens de balayage optiques (13, 14 ; 33, 34) et le corps transparent (15 ; 35) et fixé par rapport au corps transparent (15 ; 35) et formé de manière à modifier la longueur de la zone d'intersection du ou des faisceaux de rayonnement électromagnétique collimatés (19 ; 37) incidents sur la première surface d'entrée (18 ; 38) du corps transparent (15 ; 35), en fonction de l'angle d'incidence à partir des moyens de balayage (13, 14 ; 33, 34) au cours du balayage angulaire.

4. Dispositif selon l'une quelconque des revendications 1 à 3, **caractérisé en ce que** les moyens de balayage optiques (13, 14 ; 33, 34) comprennent des premier et second miroirs oscillants (13, 14 ; 33, 34), le premier miroir oscillant (13, 33) étant agencé afin de réfléchir le ou les faisceaux de rayonnement électromagnétique collimatés (19 ; 37) sur le second miroir oscillant (14 ; 34).

5. Dispositif selon la revendication 4, **caractérisé en ce que** le rapport de l'amplitude de balayage angulaire du second miroir oscillant (14 ; 34) sur celle du premier miroir oscillant (13 ; 33) varie de 1 environ à 10 environ.

6. Dispositif selon l'une quelconque des revendications 1 à 3, **caractérisé en ce que** les moyens de balayage optiques (13, 14 ; 33, 34) comprennent des premier et second miroirs tournants, le premier miroir tournant étant agencé afin de réfléchir le ou les faisceaux de rayonnement électromagnétique collimatés (19 ; 37) sur le second miroir tournant.

7. Dispositif selon la revendication 6, **caractérisé en ce que** le rapport de l'amplitude de balayage angulaire du second miroir tournant sur celle du premier miroir tournant varie de 1 environ à 10 environ.

8. Dispositif selon la revendication 1, **caractérisé en ce que** les amplitudes de balayage angulaire assurées par les moyens de balayage optiques (13, 14 ;33, 34) sont asymétriques par rapport à l'angle de balayage central.

9. Dispositif selon la revendication 8, **caractérisé en ce que** les moyens de balayage optiques (13, 14 ; 33, 34) comprennent des premier et second miroirs oscillants (13, 14 ; 33, 34), le premier miroir (13, 33) étant agencé afin de réfléchir le le ou les faisceaux de rayonnement électromagnétique collimatés (19 ; 37) sur le second miroir (14, 34).

10. Dispositif selon la revendication 9, **caractérisé en ce que** le rapport de l'amplitude de balayage angulaire du second miroir oscillant (14, 34) sur celle du premier miroir oscillant (13, 33) varie de 1 environ à 10 environ.

11. Dispositif selon la revendication 8, **caractérisé en ce que** les moyens de balayage optiques (13, 14 ; 33, 34) comprennent des premier et second miroirs tournants, le premier miroir tournant étant agencé afin de réfléchir le ou les faisceaux de rayonnement électromagnétique collimatés (19 ; 37) sur le second miroir tournant.

12. Dispositif selon la revendication 11, **caractérisé en ce que** le rapport de l'amplitude de balayage angulaire du second miroir tournant sur celle du premier miroir tournant varie de 1 environ à 10 environ.

13. Dispositif selon la revendication 1, **caractérisé en ce qu'**il comprend des moyens destinés à modifier la puissance de rayonnement du faisceau incident ou réfléchi.

14. Dispositif selon la revendication 13, **caractérisé en ce que** la puissance de rayonnement du faisceau est modifiée avant que le faisceau soit réfléchi par les moyens de balayage optiques (13, 14 ; 33, 34).

15. Dispositif selon la revendication 14, **caractérisé en ce que** le moyen de modification de la puissance de rayonnement du ou des faisceaux de rayonnement électromagnétique collimatés (19 ; 37) comprend des moyens destinés à réguler le courant ou la tension d'attaque de la ou des sources de rayonnement électromagnétique (10 ; 30).

16. Dispositif selon la revendication 15, **caractérisé en ce que** le moyen de régulation du courant ou de la tension d'attaque de la ou des sources de rayonnement électromagnétique (10 ; 30) comprend un signal de commande proportionnel à l'intensité détectée du ou des faisceaux sur le détecteur.

17. Dispositif selon la revendication 13 ou 14, **caractérisé en ce que** le moyen destiné à modifier la puissance du ou des faisceaux de rayonnement électromagnétique collimatés (19 ; 37) comprend un atténuateur de puissance de faisceau électromécanique.

18. Dispositif selon la revendication 17, **caractérisé en ce que** l'atténuateur de puissance de faisceau électromécanique est sélectionné à partir d'éléments polarisants linéaires coopérants et de filtres à densité variables.

19. Dispositif selon l'une quelconque des revendications 1 à 18 destiné à la spectroscopie par réflexion totale atténuée (RTA), **caractérisé en ce que** le ou les détecteurs (D) sont agencés de manière à détecter le rayonnement électromagnétique totalement réfléchi de manière interne au niveau de la deuxième surface (16 ; 36) et sortant de la troisième surface (21 ; 40) du corps transparent (15 ; 35).

20. Dispositif selon l'une quelconque des revendications 1 à 18, **caractérisé en ce que** le ou les détecteurs (D) sont agencés de manière à détecter le rayonnement électromagnétique provenant d'une fluorescence ou phosphorescence stimulée par onde évanescente d'une ou plusieurs substances en contact avec la deuxième surface (16 ; 36) du corps transparent (15 ; 35).

21. Dispositif selon l'une quelconque des revendications 1 à 18, **caractérisé en ce que** le ou les détecteurs (D) sont agencés afin de détecter le rayonnement électromagnétique provenant de la diffusion au niveau de la deuxième surface (16 ; 36) du corps transparent (15 ; 35).

22. Dispositif selon l'une quelconque des revendications 1 à 18, **caractérisé en ce que** le ou les détecteurs (D) sont agencés afin de détecter au moins deux parmi un rayonnement électromagnétique totalement réfléchi de manière interne au niveau de la deuxième surface (16 ; 36), un rayonnement électromagnétique provenant d'une fluorescence ou phosphorescence stimulée par onde évanescente, et un rayonnement électromagnétique provenant de la diffusion au niveau de la deuxième surface (16 ; 36) du corps transparent (15 ; 35).

23. Procédé de mise en oeuvre d'une spectroscopie basée sur la réflexion interne totale (RIT), lequel procédé comprend :
l'exposition d'au moins une zone d'une deuxième surface plane (16 ; 36) d'un corps transparent (15 ; 35) à au moins un faisceau de rayonnement électromagnétique collimaté (19 ; 37) de telle manière que le rayonnement est totalement réfléchi de manière interne au niveau de la deuxième surface plane (16 ; 36), la deuxième surface plane (16 ; 36) formant une surface de détection,
la formation d'une image sur un réseau de détecteur bidimensionnel (D) respectif à partir d'au moins l'un parmi (i) un rayonnement réfléchi de manière interne provenant de la ou des zones éclairées, (ii) un rayonnement fluorescent ou phosphorescent provenant de la ou des zones éclairées, provoqué par stimulation par onde évanescente, et (iii) un rayonnement provenant d'une diffusion stimulée par onde évanescente au niveau de la ou des zones éclairées,
le balayage séquentiel ou continu de l'angle d'incidence du rayonnement au niveau de la deuxième surface plane (16 ; 36) sur une plage angulaire, la ou les zones éclairées présentant une position centrale au moins sensiblement fixe au cours du balayage angulaire,
la mesure sous au moins un certain nombre d'angles d'incidence du rayonnement réfléchi au niveau de la deuxième surface plane (16 ; 36) du corps transparent (15 ; 35), les intensités du rayonnement formant une image sur différentes parties du réseau de détecteur (D), et
la détermination, à partir des intensités de rayonnement détectées au niveau des différents angles d'incidence sur la deuxième surface plane (16 ; 36), d'au moins l'une parmi une image d'épaisseur optique, une image d'indice de réfraction, une image de concentration de surface de la surface, et la variation de telles images avec le temps,
**caractérisé par** la modification continue de la longueur de la zone d'intersection du ou des faisceaux de rayonnement électromagnétique collimatés (19 ; 37) incident sur une première surface d'entrée plane (18 ; 38) du corps transparent (15 ; 35), en fonction de l'angle d'incidence au niveau de la deuxième surface plane (16 ; 36) au cours du balayage angulaire, en dirigeant le ou des faisceaux (19 ; 37) sous un angle d'incidence oblique sur la première surface plane d'entrée (18 ; 38), de telle sorte que l'angle d'incidence par rapport à la première surface plane d'entrée (18 ; 38) diminue de manière continue lorsque l'angle d'incidence par rapport à la deuxième surface plane (16 ; 36) augmente, de telle sorte que la longueur de la ou des zones éclairées de la position centrale fixe de la deuxième surface plane (16 ; 36) est maintenue sensiblement constante, de manière à assurer une zone éclairée et une densité de flux sensiblement constantes sur la deuxième surface plane (16 ; 36) au cours du balayage angulaire.

24. Procédé selon la revendication 23, **caractérisé en ce que** le procédé comprend, en outre, l'étape de modification de la puissance du ou des faisceaux de rayonnement électromagnétique collimatés (19 ; 37) incidents sur la deuxième surface plane (16 ; 36) ou réfléchis par cette dernière.

25. Procédé selon la revendication 24, **caractérisé en ce que** la puissance du ou des faisceaux (19 ; 37) est modifié avant le balayage du faisceau.

26. Procédé selon l'une quelconque des revendications 24 à 25 [26] destiné à mettre en oeuvre la spectroscopie RTA, **caractérisé en ce que** le rayonnement réfléchi de manière interne à partir de la ou des zones éclairées forme une image sur le réseau de détecteur (D).

27. Procédé selon l'une quelconque des revendications 23 à 26, **caractérisé en ce que** le procédé est mis en oeuvre sous deux longueurs d'onde différentes.
